# EUROPÄISCHE PATENTSCHRIFT

(11) **EP 1 215 224 B1**
(45) Veröffentlichungstag und Bekanntmachung des Hinweises auf die Patenterteilung: **26.07.2006**
(21) Anmeldenummer: 01126452.0
(22) Anmeldetag: 09.11.2001
(51) Int. Cl.: C08G 61/12, H01B 1/12

(54) **Polythiophene**
Polythiophenes
Polythiophènes

(30) Priorität: 22.11.2000 DE 10058116
(43) Veröffentlichungstag der Anmeldung: 19.06.2002
(73) Patentinhaber: H.C. Starck GmbH, 38642 Goslar (DE)
(72) Erfinder: Kirchmeyer, Stephan, Dr., 51375 Leverkusen (DE); Wussow, Klaus, Dr., 57250 Netphen (DE); Jonas, Friedrich, Dr., 52066 Aachen (DE); Elschner, Andreas, Dr., 45479 Mülheim (DE)
(74) Vertreter: Feldhues, Michael L.F.

(56) Entgegenhaltungen:
- EP-A- 0 340 512
- EP-A- 0 440 957
- DE-A- 4 226 757
- DE-A- 19 841 804
- US-A- 5 621 069
- LEE Y ET AL: "SYNTHESIS AND CHARACTERIZATION OF A SOLUBLE AND TRANSPARENT CONDUCTING POLYMER, POLY(3,4-ETHYLENEDIOXYTHIOPHENE)" MOLECULAR CRYSTALS AND LIQUID CRYSTALS, GORDON AND BREACH, LONDON, GB, Bd. 327, 1999, Seiten 237-240, XP001062592 ISSN: 0026-8941

## Beschreibung

Die Erfindung betrifft ein Verfahren zur Herstellung von Polythiophenen, die in wasserfreien oder wasserarmen Lösungsmitteln löslich bzw. dispergierbar sind, nach diesem Verfahren erhältliche Polythiophene und deren Verwendung.

Organische leitfähige Polymere haben in der Technik mehr und mehr Verbreitung gefunden. Einsatzgebiete sind z.B. die Durchkontaktierung von Leiterplatten (EP 553 671 A1), Antistatikausrüstung fotographischer Filme (EP 440 957 A2) oder als Elektrode in Feststoffelektrolytkondensatoren (EP 340 512 A2). Besondere Bedeutung haben Poly-3,4-alkylendioxythiophene erlangt, die sich durch hohe Stabilität und elektrische Leitfähigkeit auszeichnen.

In EP 440 957 A2 werden wasserlösliche bzw. wasserdispergierbare Polyalkylendioxythiophene beschrieben. Diese werden direkt in Gegenwart von Polyanionen in wässriger Phase synthetisiert. Die wässrigen Zubereitungen werden zur Herstellung leitfähiger bzw. antistatischer Beschichtungen eingesetzt. Für viele Anwendungen besteht aber ein Bedarf an Polyalkylendioxythiophenen, die in Form von wasserfreien bzw. wasserarmen Lösungen oder Dispersionen verarbeitet werden können, z.B. zur Verkürzung der Trockenzeiten der Beschichtungen oder zur Verbesserung des Benetzungsverhaltens. Nach Entfernen des Wassers aus den in EP 440 957 A2 beschriebenen Lösungen sind die erhaltenen Feststoffe in Wasser und organischen Lösungsmitteln unlöslich.

In EP 339 340 A2 ist die Herstellung von 3,4-Polyalkylendioxythiophenen durch Umsetzung der entsprechenden Monomere mit Oxidationsmitteln beschrieben. Die so hergestellten 3,4-Polyalkylendioxythiophene sind in organischen und anorganischen Lösungsmitteln ebenfalls unlöslich.

EP 440 957 A2 lehrt, dass die Herstellung von wasserlöslichen bzw. wasserdispergierbaren Polyalkylendioxythiophenen prinzipiell auch in Gegenwart von protischen Lösungsmitteln wie Methanol, Ethanol, Isopropanol und anderen mit Wasser mischbaren organischen Lösungsmitteln wie z.B. Aceton erfolgen kann. Jedoch sind hierbei nur geringe Beimischungen von organischen Lösemitteln möglich, wasserfreie bzw. wasserarme Lösungen oder Dispersionen sind so nicht zugänglich.

Polyalkylendioxythiophene werden bevorzugt durch oxidative Polymerisation hergestellt. Als Oxidationsmittel sind Übergangsmetalle, salzartige Verbindungen und andere Oxidationsmittel bekannt. Hierbei werden Übergangsmetalle und salzartige Oxidationsmittel, insbesondere Alkali- oder Ammoniumperoxodisulfate bevorzugt eingesetzt.

Zwar hat es Versuche gegeben, übergangsmetallhaltige Oxidationsmittel wie Eisen(III)salze für die Polymerisation von Thiophenen in organischen Lösungsmitteln wie z.B. Chloroform, Acetonitril und Methanol zu verwenden, jedoch ist dies mit Schwierigkeit und Nachteilen behaftet. Die so hergestellten Polythiophene sind nicht, nur teilweise oder nur mit Hilfe von weiteren Dispergierhilfsmitteln in Lösemitteln dispergierbar (Siehe hierzu z.B. Lee, S. Park und Y. Son, Mol. Cryst. Liq. Cryst. **327** (1999) 237-240). Die übergangsmetallhaltigen Rückstände der Oxidationsmittel sind aus den Reaktionslösungen nur schwer zu entfernen und beeinflussen die Qualität der leitfähigen oder antistatischen Beschichtungen, wie z.B. deren Alterungsbeständigkeit, negativ.

Salzartige Oxidationsmittel wie Peroxodisulfat bzw. Perborate und andere salzartige Verbindungen reagieren in Abwesenheit von Wasser oder in Anwesenheit von nur geringen Mengen an Wasser nicht oder nur sehr langsam, so dass sich bei Reaktionsführung in wasserarmen Lösungsmitteln inakzeptabel lange Reaktionszeiten ergeben. Die so erhältlichen Reaktionslösungen enthalten große Mengen an Monomeren und praktische keine Polythiophene und sind daher nicht verwendbar.

Es wurde nun überraschenderweise gefunden, dass sich Polythiophene hoher Qualität und leichter Löslichkeit bzw. Dispergierbarkeit in wasserfreien oder wasserarmen Lösungsmitteln herstellen lassen, wenn man diese in wasserfreien oder wasserarmen Lösungsmitteln herstellt und während der Reaktion Phasentransferkatalysatoren zusetzt. Das Herstellverfahren besitzt den Vorteil, dass lösemittelhaltige wasserfreie oder wasserarme Polythiophen-Dispersionen oder ―Lösungen hergestellt werden können, die nach Aufarbeitung nur geringe Metall- und Salzgehalte aufweisen. Die nach dem erfindungsgemäßen Verfahren hergestellten Polythiophene können als Feststoff, Dispersion oder Lösung stabil gelagert werden und eignen sich zur Herstellung leitfähiger bzw. antistatischer Schichten hoher Qualität.

Bei gleicher chemischer Zusammensetzung unterscheiden sich die erfindungsgemäßen Polythiophene überraschend deutlich von Polythiophen, die gemäß dem Stand der Technik hergestellt wurden. Die erfindungsgemäßen Polythiophene lösen sich spontan in Lösungsmitteln und auch Wasser auch in hohen Konzentrationen, ohne dass es zu Ausfällungen, Verquellungen oder anderen unerwünschten Effekten, wie z.B. Erhöhung der Viskosität kommt.

Dies war für den Fachmann überraschend und nicht vorhersehbar, da der Fachmann annehmen musste, dass die Polymerisationsreaktion von identischen Thiophen-Edukten unter Einsatz des identischen Oxidationsmittels zu Produkten mit bekannten Eigenschaften führen und der Zusatz von Phasentransferkatalysatoren lediglich die Reaktionsgeschwindigkeit während der Polymerisation erhöhen sollte. Dies ist jedoch nicht der Fall. Die erfindungsgemäßen Polythiophene lösen sich spontan in Wasser und organischen Lösungsmitteln auf.

Gegenstand der Erfindung ist daher ein Verfahren zur Herstellung von Polythiophenen, wobei man
a) ein oder mehrere Thiophene der allgemeinen Formel (I) 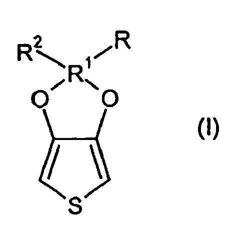 in der R¹ für einen gegebenenfalls substituierten Alkylen- oder Alkenylenrest mit 1 bis 10 Kohlenstoffatomen und
   R und R² unabhängig voneinander für Wasserstoff, einen linearen oder verzweigten Alkylrest mit 1 bis 18 Kohlenstoffatomen, OH, O-CH₂-CH₂-CH₂-SO₃H oder O-Alkyl mit 1-18 C-Atomen stehen,
b) mindestens eine oder mehrere Sulfonsäuregruppen enthaltende Verbindung,
c) mindestens ein Oxidationsmittel,
d) mindestens einen Phasen-Transferkatalysator und
e) ggf. einen oder mehrere Katalysatoren
in mindestens einem wasserfreien oder wasserarmen Lösungsmittel bei Temperaturen zwischen 0 und 150°C umsetzt und anschließend aufarbeitet, wobei wasserarme Lösungsmittel solche enthaltend bis zu 5 Gew.-% an Wasser sind.

Gegenstand der Erfindung sind auch die nach diesem Verfahren herstellbaren Polythiophene.

Gegenstand der Erfindung ist schließlich die Verwendung der erfindungsgemäß hergestellten Polythiophene z.B. in Form von Feststoffen, Dispersionen oder Lösungen zur Herstellung von leitfähigen und/oder antistatischen Beschichtungen und Formteilen.

Bevorzugt werden im erfindungsgemäßen Verfahren Thiophene der allgemeinen Formel (II) oder (III) 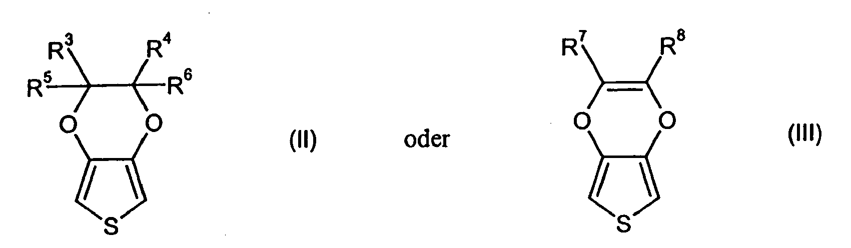 eingesetzt, wobei
- R³, R⁴, R⁵, R⁶, R⁷ und R⁸: jeweils unabhängig voneinander ein Wasserstoffatom, eine Alkylgruppe mit 1 bis 20 Kohlenstoffatomen, eine Hydroxymethylgruppe oder eine ggf. mit Sulfonsäuregruppen substituierte Alkoxymethylgruppe (R-O-CH₂-) mit 1 bis 20 Kohlenstoffatomen bedeuten.

Besonders bevorzugt handelt es sich bei den im erfindungsgemäßen Verfahren eingesetzten Thiophenen um Thiophene der allgemeinen Formel (IV), 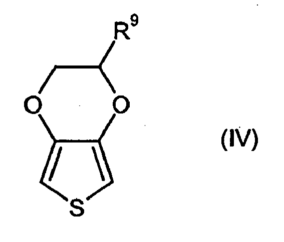 wobei
- R⁹: einen Wasserstoff oder einen Alkylrest mit 1 bis 20 Kohlenstoffatomen bedeutet.

Als ganz besonders geeignete Thiophene seien genannt: 3,4-Methylendioxythiophen, 3,4-Ethylendioxythiophen, 3,4-Propylendioxythiophen, Hydroxy- bzw. Alkoxygruppen tragende Thiophene, wie sie beispielsweise in US-A-5 111 327 beschrieben werden, und Thiophene, die [-CH₂-O-(CH₂)ₙ-SO₃H]-Gruppen tragen.

Als eine oder mehrere Sulfonsäuregruppen enthaltende Verbindung sind Verbindungen geeignet, die mindestens eine an ein aliphatisches, cycloaliphatisches oder aromatisches Kohlenstoffatom geknüpfte Sulfonsäure tragen. Dies sind bevorzugt Polysulfonsäuren z.B. Polystyrolsulfonsäuren und Polyvinylsulfonsäuren mit einem Molekulargewicht (Mw) von 2000 bis 2000000, vorzugsweise 5000 bis 500000, Toluolsulfonsäuren, Benzolsulfonsäuren, die Alkylreste mit 1 bis 20 Kohlenstoffatomen tragen können, beispielsweise Dodecylbenzolsulfonsäure, Alkylsulfonsäuren mit 1 bis 20 Kohlenstoffatomen, beispielsweise Methansulfonsäure und Laurylsulfonsäure. Gegebenfalls können aber auch Verbindungen, die eine [-O-SO₂-OH-]-Gruppe tragen (d.h. Schwefelsäurehalbester) verwendet bzw. mitverwendet werden.

Als Oxidationsmittel werden vorzugsweise salzartige Oxidationsmittel eingesetzt, bevorzugt Peroxodisulfate, beispielsweise Alkali- und Ammoniumperoxodisulfat, und Percarbonate wie Alkalipercarbonat.

Erfindungsgemäß erfolgt die Herstellung von Polythiophenen in Gegenwart eines Phasentransferkatalysators. Phasentransferkatalysatoren erhöhen die Löslichkeit der Oxidationsmittel im Lösungsmittel. Als Phasentransferkatalysatoren sind beispielsweise Verbindungen geeignet, die entweder Alkaliionen komplexieren, oder ionische Verbindungen mit langkettigen Alkylresten, die ein im Lösungsmittel lösliches Gegenion aufweisen und dadurch die Löslichkeit der Oxidationsmittel erhöhen. Bevorzugt werden als Phasentransferkatalysatoren Verbindungen mit -CH₂- und -O-Struktureinheiten eingesetzt, beispielsweise Kronenether, wie z.B. 12-Krone-4 oder 18-Krone-6, Benzo- oder Dibenzo-18-krone-6 oder aus Ethylenoxid hergestellte Polyether. Ebenfalls bevorzugt sind quartäre Ammoniumsalze, insbesondere bevorzugt Alkylreste oder Arylalkylreste mit 4 bis 20 Kohlenstoffatomen aufweisende quartäre Ammoniumsalze, wie z.B. Butyl-, Decyl-, Lauryl- oder Benzyl-trimethylammonium-Salze, und entsprechende Phosphorverbindungen.

Gegebenenfalls werden im erfindungsgemäßen Verfahren ein oder mehrere Katalysatoren zugegeben, welche die Geschwindigkeit der Polymerisation erhöhen. Geeignete Katalysatoren sind beispielsweise Eisen(III)- oder andere Übergangsmetallverbindungen, wie z.B. Mangan-Salze. Beispielhaft seien genannt: Eisen(III)chlorid, Eisen(III)sulfat, Eisen(III)toluolsulfonat, Mangandioxid und Mangan(II)salze.

Das erfindungsgemäße Verfahren wird in einem wasserfreien bzw. wasserarmen Lösungsmittel durchgeführt. Es werden Lösungsmittel verwendet, die bis zu 5 Gew.-% an Wasser enthalten. Vorzugsweise enthalten die Lösungsmittel weniger als 2 Gew.-% an Wasser.

Als wasserfreie bzw. wasserarme Lösungsmittel sind prinzipiell organische Lösungsmittel geeignet. Dies sind z.B. Alkohole, beispielsweise Methanol, Ethanol, Propanol, Butanol, Pentanol oder höhere Alkohole, Ethylenglykol, Diethylenglykol, Triethylenglykol oder höhere Homologe, Ketone wie z.B. Aceton oder Butanon, chlorierte Kohlenwasserstoffe, beispielsweise Methylenchlorid, Chloroform, Tetrachlorkohlenstoff, Dichlorethan oder Trichlorethan, aromatische Verbindungen wie z.B. Toluol, Xylol, Chlorbenzol oder Dichlorbenzol, aliphatische oder cycloaliphatische Kohlenwasserstoffe wie z.B. Pentan, Hexan, Heptan, Cyclohexan und Octan, Ether wie z.B. Tetrahydrofuran, Diethylether, Methy-tert-butylether, Ethylenglykolmono- oder ―dimethylether oder dessen höhere Homologe, Amide, wie z.B. Dimethylformamid, Dimethylacetamid oder N-Methylpyrrolidon und Ester, wie z.B. Essigsäureethyl- oder -butylester.

Bevorzugt handelt es sich bei den wasserfreien bzw. wasserarmen Lösungsmitteln um niedere Alkohole mit 1 bis 8 Kohlenstoffatomen, vorzugsweise Methanol, Ethanol, Propanol, Isopropanol, Butanol, und/oder Pentanol.

Das erfindungsgemäße Verfahren wird üblicherweise so durchgeführt, dass man pro Mol eingesetztem Thiophen oder eingesetzter Mischung mehrerer Thiophene 0,1 bis 20 Mol, vorzugsweise 0,2 bis 10 Mol, besonders bevorzugt 0,5 bis 5 Mol Äquivalente Sulfonsäuregruppen der Sulfonsäuregruppen enthaltenden Verbindung, 0,9 bis 5,0 Mol, vorzugsweise 1,0 bis 3,0 Mol, besonders bevorzugt, 1,1 bis 2,0 Mol Äquivalente des Oxidationsmittels, vorbei ein Äquivalent Oxidationsmittel zwei Mol Elektronen aufzunehmen vermag, 0,1 bis 10 Mol-% vorzugsweise 1 bis 5 Mol-% Phasen-Transferkatalysator, bezogen auf das Oxidationsmittel, 0 bis 10 Mol-% Katalysator, bezogen auf Thiophen, und Lösungsmittel in einer Menge, so dass das Verhältnis von Thiophen zum Lösungsmittel 0,001 bis 0,1 zu 1 beträgt, bei Temperaturen zwischen 0 und 150°C, vorzugsweise zwischen 15 und 70°C, besonders bevorzugt zwischen 20 und 40°C umsetzt und anschließend aufarbeitet.

Die Aufarbeitung besteht bevorzugt aus der Entfernung von in der Reaktionsmischung verbliebenen Ionen, d.h. vorzugsweise einer Entsalzung. Bei der Aufarbeitung kann jedoch auch die Abtrennung von möglichen unerwünschten Nebenkomponenten aus der Reaktionslösung erfolgen.

Mögliche Aufarbeitungsschritte sind z.B. Filtration oder Dekantieren der Reaktionslösung, Fällen, Waschen und Trocknen des Polythiophens und weitere Reinigungsschritte, die üblich und dem Fachmann bekannt sind. In vielen Fällen ist es jedoch ratsam, Salze zusätzlich mit Hilfe von dem Fachmann bekannten Ionenaustauscherharzen oder anderer spezieller Methoden zur selektiven Entfernung von Ionen z.B. mit Hilfe ionenselektiver Membranen zu entfernen.

Die nach dem erfindungsgemäßen Verfahren hergestellten Polythiophene können als Feststoff, Dispersionen oder Lösungen stabil gelagert werden.

Die erfindungsgemäßen Polythiophene können als Dispersionen oder Lösungen zur Herstellung von elektrisch leitfähigen oder antistatischen Beschichtungen verwendet werden. Geeignete Einsatzgebiete sind die Ausrüstung von Kunststofffolien für die Verpackung elektronischer Bauteile und für Reinraumverpackungen, antistatische Ausrüstung von Kathodenstrahlröhren, antistatische Ausrüstung von photographischen Filmen, als transparente Elektroden, z.B. für Touch Screens und organische oder anorganische Elektrolumineszenzanzeigen, für die Herstellung von Kondensatoren, Batterien, Leiterplatten oder von elektrisch einfärbbaren Fensterscheiben.

Vor Herstellung der Beschichtungen können den erfindungsgemäßen Polythiophen-Dispersionen Bindemittel und/oder Vernetzer wie Polyurethane bzw. Polyurethandispersionen, Polyacrylate, Polyolefindispersionen, Epoxysilane, wie 3-Glycidoxypropyltrialkoxysilan zugesetzt werden. Weiterhin können Silanhydrolysate z.B. auf Basis von Tetraethoxysilan zur Erhöhung der Kratzfestigkeit bei Beschichtungen zugesetzt werden.

Die Herstellung der Beschichtungen kann nach bekannten Verfahren wie Sprühen, Tiefdruck, Offsetdruck, Vorhanggießen, Auftrag über Antragwalzen und Streichen erfolgen.

### Beispiele

### Beispiel 1 (Herstellung einer ethanolischen Polystyrolsulfonsäure-Lösung)

400 ml einer wässrigen Lösung einer Polystyrolsulfonsäure mit einem Molekulargewicht (Mw) von ca. 70.000 wurden bis zur Trockne eingedampft und in 1000 ml Ethanol gelöst. Der Feststoffgehalt der Lösung wurde mit 10,4 Gew.-% bestimmt.

### Beispiel 2 (Herstellung eines erfindungsgemäßen Polythiophens in Form einer Lösung)

In einen Reaktor wurden 133 ml Ethanol, 14,77 g (0,0256 mol) Eisen(III)toluolsulfonat, 1399,76 g der Polystyrolsulfonsäure-Lösung aus Beispiel 1, 3,7 g (0,014 mol) 18-Krone-6, 74,66 g (0,2765 mol) Kaliumperoxodisulfat und 27,97 g (0,1967 mol) 3,4-Ethylendioxythiophen zusammengegeben und 1 Minute mit einem handelsüblichen Dispergieraggregat (Ultra-Turrax® der Fa. IKA) homogenisiert. Es entstand eine feinteilige Suspension. Anschließend wurde die Suspersion 24 h bei Raumtemperatur gerührt. Der Reaktorinhalt färbte sich während der Reaktionszeit dunkelblau. Durch gaschromatographische Untersuchung wurde der Reaktionsumsatz mit 95,1 % bestimmt.

### Beispiel 3 (Reinigung eines erfindungsgemäßen Polythiophens)

Die Lösung aus Beispiel 2 wurde filtriert, 455 ml Kationenaustauscher (Lewatit® S 100, ein stark saurer, Sulfonatgruppen enthaltender Ionenaustauscher auf der Basis von vernetztem Polystyrol , Handelsprodukt der Fa. Bayer AG, Leverkusen) und 525 ml Anionenaustauscher (Lewatit® MP 62, ein basischer, tertiäre Aminogruppen enthaltender Ionenaustauscher auf der Basis von vernetztem Polystyrol, Handelsprodukt der Fa. Bayer AG, Leverkusen) zugesetzt, 1 h gerührt und filtriert. Man erhielt eine tiefblaue, klare Lösung. Ein Probe dieser Lösung wurde mit Ethanol auf 0,4 Gew.-% Feststoff verdünnt, und aus der verdünnten Lösung ein 60 µm dicker Film auf eine Kunststofffolie (Polyethylenterephthalat) mit Hilfe eines Rakels aufgebracht und 15 min. bei 80°C getrocknet. Die Schichtdicke des trockenen Films betrug ca. 240 nm. Der Oberflächenwiderstand der aufgetragenen Schicht betrug nach IEC-Norm-93 (VDE 0303 Teil 30) bzw. ASTM D 257 7 MOhm/Quadrat.

### Beispiel 4 (Reinigung und Isolierung eines erfindungsgemäßen Polythiophens)

Eine Polythiophen-Lösung wurde gemäß Beispiel 2 hergestellt. Die Lösung wurde filtriert. Zu 1000 ml der Polythiophen-Lösung wurden 1500 ml Toluol unter Rühren hinzugegeben und 15 min nachgerührt. Man erhielt eine dunkelblaue Ausfällung, von der die überstehende klare Flüssigkeit dekantiert wurde. Der Rückstand wurde zweimal mit je 100 ml Toluol gewaschen, getrocknet und pulverisiert. Man erhielt 97 g dunkelblau-schwarzes Pulver.

### Beispiel 5 (Herstellung einer Lösung des erfindungsgemäßen Polythiophens in Ethanol)

10 g des Polythiophen-Pulvers aus Beispiel 4 wurden 30 Minuten in 90 ml Ethanol gerührt. Man erhielt eine tiefblaue klare Lösung. Die Lösung wurde über einen 0,2µm-Filter filtriert. Man erhielt keinen Filtrations-Rückstand. Die Teilchengrößenverteilung der Lösung wurde mittels Lichtstreuung in einer Ultrazentrifuge gemessen. Die mittlere Teilchengröße betrug ca. 30 nm (d50).

Gemäß Beispiel 3 wurde von der Lösung ein ca. 240 nm dicker Film hergestellt. Der Oberflächenwiderstand der aufgetragenen Schicht betrug nach IEC-Norm-93 (VDE 0303 Teil 30) bzw. ASTM D 257 6,7 MOhm/Quadrat.

### Beispiel 6 (Herstellung einer Lösung des erfindungsgemäßen Polythiophens in Wasser)

10 g des Polythiophen-Pulvers aus Beispiel 4 wurden 30 Minuten in 90 ml Wasser gerührt. Man erhielt eine tiefblaue klare Lösung. Die Lösung wurde über einen 0,2µm-Filter filtriert. Man erhielt keinen Rückstand. Die Teilchengrößenverteilung der Lösung wurde mittels Lichtstreuung in einer Ultrazentrifuge gemessen. Die mittlere Teilchengröße betrug ca. 30 nm (d50).

Gemäß Beispiel 3 wurde von der Lösung ein ca. 240 nm dicker Film hergestellt. Der Oberflächenwiderstand der aufgetragenen Schicht betrug nach IEC-Norm-93 (VDE 0303 Teil 30) bzw. ASTM D 257 5,2 MOhm/Quadrat.

### Vergleichsbeispiel 1 (Nachstellung von Beispiel 2 ohne Phasentransferkatalysator)

In einen Reaktor wurden 133 ml Ethanol, 14,77 g (0,0256 mol) Eisen(III)toluolsulfonat, 1399,76 g der Polystyrolsulfonsäure-Lösung aus Beispiel 1, 74,66 g (0,2765 mol) Kaliumperoxodisulfat und 27,97 g (0,1967 mol) 3,4-Ethylendioxythiophen zusammengegeben und 1 Minute mit einem handelsüblichen Dispergieraggregat (Ultra-Turrax® der Fa. IKA) homogenisiert. Es entstand eine feinteilige Suspension. Anschließend wurde die Suspension 24 h bei Raumtemperatur gerührt. Der Reaktorinhalt verfärbte sich während der Reaktionszeit nicht. Nach einer Woche Reaktionszeit war der Inhalt leicht grünlich. Durch gaschromatographische Untersuchung wurde der Reaktionsumsatz mit 2,5 % bestimmt.

Vergleichsbeispiel 1 zeigt, dass ohne Zusatz von Phasentransferkatalysatoren keine ausreichende Reaktionsgeschwindigkeit erreicht wird und nahezu kein Polythiophen erhalten wird.

**Vergleichsbeispiel 2** (Nachstellung von Beispiel 2 in Wasser)

In einen Reaktor wurden 724 g Wasser, 14,77 g (0,0256 mol) Eisen(III)toluolsulfonat, 808,75 einer Polystyrolsulfonsäure-Lösung in Wasser (Mw ca. 70.000 g/mol, 18 Gew.-% in Wasser), 3,7 g (0,014 mol) 18-Krone-6, 74,66 g (0,2765 mol) Kaliumperoxodisulfat und 27,97 g (0,1967 mol) 3,4-Ethylendioxythiophen zusammengegeben und 1 Minute mit einem handelsüblichen Dispergieraggregat (Ultra-Turrax® der Fa. IKA) homogenisiert. Es entstand eine milchige Dispersion, die sich nach wenigen Minuten blau färbte. Anschließend wurde die Dispersion 24 h bei Raumtemperatur gerührt und homogenisiert. Es entstand eine hochviskose, grobe Gelbrocken enthaltende Suspension. Die Gelbrocken waren in Ethanol nicht löslich.

Das Vergleichsbeispiel zeigt, das die gleiche Reaktion in Wasser zu einem Polythiophen führt, das sich von einem erfindungsgemäßen Polythiophen in seiner Löslichkeit deutlich unterscheidet.

### Vergleichsbeispiel 3 (Herstellung eines Polythiophens der gleichen Zusammensetzung wie Beispiel 2 nach EP 440957 A2 in Wasser, aber mit geringerem Feststoffgehalt)

In einen Reaktor wurden 1588,13 g Wasser, 15,08 g einer 1 Gew.-prozentigen wässrigen Eisen(III)sulfat-Lösung, 359,79 g einer Polystyrolsulfonsäure-Lösung in Wasser (Mw ca. 70.000 g/mol, 5,5 Gew.-% in Wasser) und 8,02 g (0,056 mol) 3,4-Ethylendioxythiophen bei Raumtemperatur vorgelegt und 15 Minuten mit einem handelsüblichen Dispergieraggregat (Ultra-Turrax® der Fa. IKA) homogenisiert. Es entstand eine milchige Dispersion. Man gab 19,24 g (0,081 mol) Natriumperoxodisulfat hinzu. Nach ca. 10 Minuten färbte sich die Lösung blau. Anschließend wurde die Dispersion 24 h bei Raumtemperatur gerührt und homogenisiert. Es entstand eine dunkelblaue leicht viskose Lösung. Zu dieser Lösung wurden 106,65 g Kationenaustauscher (Lewatit® S 100, ein stark saurer, Sulfonatgruppen enthaltender Ionenaustauscher auf der Basis von vernetztem Polystyrol, Handelsprodukt der Fa. Bayer AG, Leverkusen) und 160,6 g Anionentauscher (Lewatit® MP 62, ein basischer, tertiäre Aminogruppen enthaltender Ionenaustauscher auf der Basis von vernetztem Polystyrol, Handelsprodukt der Fa. Bayer AG; Leverkusen) hinzugegeben und 30 Minuten gerührt. Anschließend wurde der Ionenaustauscher über ein 8 µm-Filter abfiltriert. Wie in Beispiel 3 beschrieben, wurde von der Lösung ein ca. 240 nm dicker Film hergestellt. Der Oberflächenwiderstand der aufgetragenen Schicht betrug nach IEC-Norm-93 (VDE 0303 Teil 30) bzw. ASTM D 257 2,5 MOhm/Quadrat.

10 ml der Lösung wurden getrocknet und pulverisiert. Das erhaltene Pulver war weder in Wasser noch in Ethanol löslich.

Das Vergleichsbeispiel zeigt, das sich gemäß dem Stand der Technik wässrige Polythiophen-Lösungen herstellen lassen, die sich jedoch von den erfindungsgemäßen Polythiophenen in ihrer Löslichkeit unterscheiden.

## Patentansprüche

1. Verfahren zur Herstellung von Polythiophenen, **dadurch gekennzeichnet, dass** man
a) ein oder mehrere Thiophene der allgemeinen Formel (I) 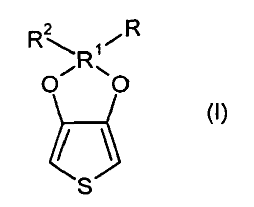 in der R¹ für einen gegebenenfalls substituierten Alkylen- oder Alkenylenrest mit 1 bis 10 Kohlenstoffatomen und
R und R² gleich oder verschieden für Wasserstoff, einen linearen oder verzweigten Alkylrest mit 1 bis 20 Kohlenstoffatomen, OH, O-CH₂-CH₂-CH₂₋SO₃H oder O-Alkyl mit 1-18 C-Atomen stehen,
b) mindestens eine oder mehrerer Sulfonsäuregruppen enthaltende Verbindung,
c) mindestens ein Oxidationsmittel,
d) mindestens einen Phasen-Transferkatalysator und
e) ggf. einen oder mehrere Katalysatoren
in mindestens einem wasserfreien oder wasserarmen Lösungsmittel bei Temperaturen zwischen 0 und 150°C umsetzt und anschließend aufarbeitet, wobei wasserarme Lösungsmittel solche enthaltend bis zu 5 Gew.-% an Wasser sind.

2. Verfahren gemäß Anspruch 1, **dadurch gekennzeichnet, dass** es sich bei dem Thiophen gemäß Formel (I) um Thiophene der allgemeinen Formel (II) 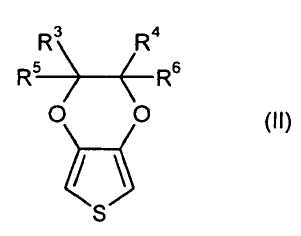 oder 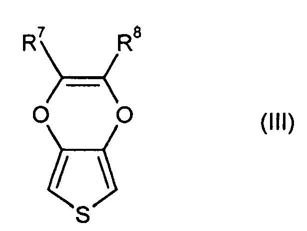 handelt, wobei R³, R⁴, R⁵, R⁶, R⁷ und R⁸ Wasserstoffatome, Alkylgruppen mit 1 bis 20 Kohlenstoffatomen, eine Hydroxymethylgruppe und ggf. mit Sulfonsäuregruppen substituierte Alkoxymethylgruppen mit 1 bis 20 Kohlenstoffatomen bedeuten.

3. Verfahren gemäß Anspruch 1 und 2, **dadurch gekennzeichnet, dass** es sich bei dem Thiophen gemäß Formel (I) um ein Thiophen der Formel (IV) 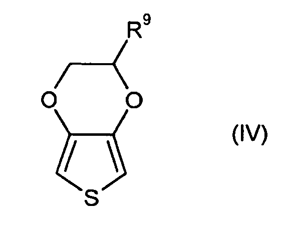 handelt, wobei R⁹ einen Wasserstoff oder einen Alkylrest mit 1 bis 20 Kohlenstoffatomen bedeutet.

4. Verfahren gemäß Anspruch 1, 2 und 3, **dadurch gekennzeichnet, dass** es sich bei der eine oder mehrere Sulfonsäuregruppen enthaltenden Verbindung um mindestens eine Verbindung ausgewählt aus Polystyrolsulfonsäuren oder Alkylbenzolsufonsäuren mit einer 1-20 C-Atome enthaltenden Alkylgruppe handelt.

5. Verfahren gemäß Anspruch 1 bis 4, **dadurch gekennzeichnet, dass** es sich bei dem Oxidationsmittel um mindestens eine Verbindung ausgewählt aus der Gruppe Ammonium-, Natrium oder Kaliumperoxodisulfat handelt.

6. Verfahren gemäß Anspruch 1 bis 5, **dadurch gekennzeichnet, dass** es sich bei dem Phasentransferkatalysator um mindestens eine Verbindung ausgewählt aus der Gruppe der Kronenether oder quartären Ammoniumsalze handelt, wobei die Ammoniumsalze mindestens einen Kohlenwasserstoffrest mit mindestens 4 Kohlenstoffatomen tragen.

7. Verfahren gemäß Anspruch 1 bis 6, **dadurch gekennzeichnet, dass** es sich bei den Lösungsmitteln um niedere Alkohole mit 1 bis 8 Kohlenstoffatomen, vorzugsweise Methanol, Ethanol, Propanol, Isopropanol, Butanol, und Pentanol handelt.

8. Polythiophene in Form von Feststoffen, Dispersionen oder Lösungen, herstellbar gemäß Anspruch 1-7.

9. Verwendung der Polythiophene gemäß Anspruch 8 zur Herstellung von leitfähigen und antistatischen Beschichtungen.

## Claims

1. A process for the production of polythiophenes,
**characterised in that**
a) one or more thiophenes of the general formula (I) 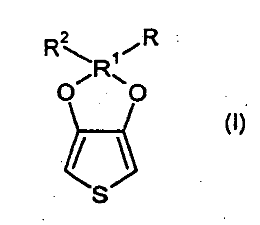 in which R¹ designates an optionally substituted alkylene or alkenylene radical with 1 to 10 carbon atoms and
R and R² are the same or different and denote hydrogen, a linear or branched alkyl radical with 1 to 20 carbon atoms, OH, O-CH₂-CH₂-CH₂₋SO₃H or O-alkyl with 1-18 C atoms,
b) at least one or more compounds containing sulfonic acid groups,
c) at least one oxidising agent,
d) at least one phase transfer catalyst and
e) optionally one or more catalysts
are reacted in at least one anhydrous or low-water-content solvent at temperatures of between 0 and 150°C and then worked up, low-water-content solvents being those containing up to 5 wt.% water.

2. The process according to claim 1, **characterised in that** the thiophene according to formula (I) is a thiophene of the general formula (II) 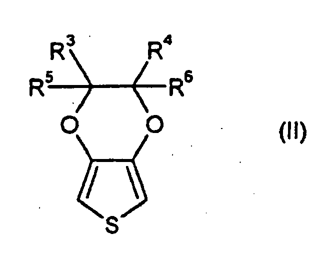 or 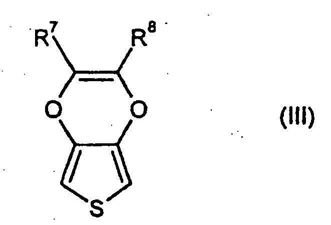 wherein R³, R⁴, R⁵, R⁶, R⁷ and R⁸ are hydrogen atoms, alkyl groups with 1 to 20 carbon atoms, a hydroxymethyl group and optionally alkoxymethyl groups substituted with sulfonic acid groups having 1 to 20 carbon atoms.

3. The process according to claims 1 and 2, **characterised in that** the thiophene according to formula (I) is a thiophene of formula (IV) 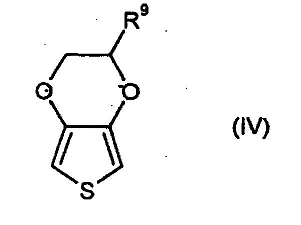 wherein R⁹ is a hydrogen or an alkyl radical with 1 to 20 carbon atoms.

4. The process according to claims 1, 2 and 3, **characterised in that** the compound containing one or more sulfonic acid groups is at least one compound selected from polystyrene sulfonic acids or alkylbenzene sulfonic acids with an alkyl group containing 1-20 C atoms.

5. The process according to claims 1 to 4, **characterised in that** the oxidising agent is at least one compound selected from the group of ammonium, sodium or potassium peroxodisulfate.

6. The process according to claims 1 to 5, **characterised in that** the phase transfer catalyst is at least one compound selected from the group of the crown ethers or quaternary ammonium salts, the ammonium salts having at least one hydrocarbon radical with at least 4 carbon atoms.

7. The process according to claims 1 to 6, **characterised in that** the solvents are lower alcohols with 1 to 8 carbon atoms, preferably methanol, ethanol, propanol, isopropanol, butanol and pentanol.

8. Polythiophenes in the form of solids, dispersions or solutions, which can be produced according to claims 1-7.

9. Use of the polythiophenes according to claim 8 for the production of conductive and antistatic coatings.

## Revendications

1. Procédé pour la préparation de polythiophènes, **caractérisé en ce que** l'on fait réagir
a) un ou plusieurs thiophènes de formule générale (I) 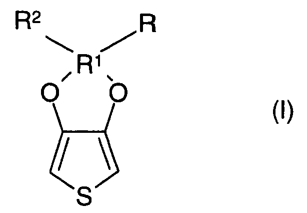 dans laquelle R¹ représente un groupe alkylène ou alcénylène en C₁-C₁₀, éventuellement substitué, et
R et R², ayant des significations identiques ou différentes, représentent chacun l'hydrogène, un groupe alkyle linéaire ou ramifié en C₁-C₂₀, un groupe OH, O-CH₂-CH₂-CH₂-SO₃H ou O-alkyle en C₁-C₁₈,
b) au moins un composé contenant un ou plusieurs groupes acide sulfonique,
c) au moins un agent oxydant,
d) au moins un catalyseur à transfert de phase et
e) le cas échéant un ou plusieurs catalyseurs,
dans au moins un solvant anhydre ou à faible teneur en eau, à des températures de 0 à 150°C, puis on soumet aux traitements habituels, étant précisé que l'on entend par solvants à faible teneur en eau des solvants contenant jusqu'à 5 % en poids d'eau.

2. Procédé selon la revendication 1, **caractérisé en ce que** les thiophènes de formule (I) répondent à la formule générale (II) ou (III) 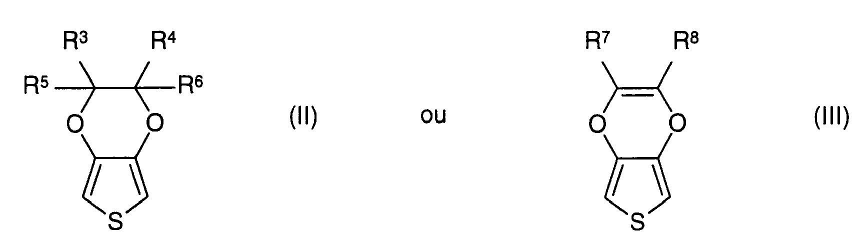 dans lesquelles R³, R⁴, R⁵, R⁶, R⁷ et R⁸ représentent des atomes d'hydrogène, des groupes alkyle en C₁-C₂₀, des groupes hydroxyméthyle ou des groupes alcoxyméthyle en C₁-C₂₀ éventuellement substitués par des groupes acide sulfonique.

3. Procédé selon les revendications 1 et 2, **caractérisé en ce que** le thiophène de formule (I) répond à la formule particulière (IV) 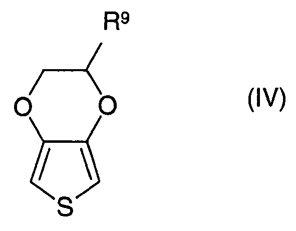 dans laquelle R⁹ représente un atome d'hydrogène ou un groupe alkyle en C₁-C₂₀.

4. Procédé selon les revendications 1, 2 et 3, **caractérisé en ce que** le composé contenant un ou plusieurs groupes acide sulfonique consiste en au moins un composé choisi parmi les acides polystyrènesulfoniques ou les acides alkylbenzènesulfoniques à groupes alkyle en C₁-C₂₀.

5. Procédé selon les revendications 1 à 4, **caractérisé en ce que** l'agent oxydant consiste en au moins un composé choisi dans le groupe des peroxodisulfates d'ammonium, de sodium ou de potassium.

6. Procédé selon les revendications 1 à 5, **caractérisé en ce que** le catalyseur à transfert de phase consiste en au moins un composé choisi dans le groupe des éthers en couronne ou des sels d'ammonium quaternaire, ces derniers portant au moins un radical hydrocarboné à au moins 4 atomes de carbone.

7. Procédé selon les revendications 1 à 6, **caractérisé en ce que** les solvants sont des alcools inférieurs en C₁-C₈, de préférence le méthanol, l'éthanol, le propanol, l'isopropanol, le butanol et le pentanol.

8. Polythiophènes à l'état de substances solides, de dispersions ou de solutions, préparés selon les revendications 1 à 7.

9. Utilisation des polythiophènes selon la revendication 8 pour l'application de revêtements conducteurs et antistatiques.
